# EUROPEAN PATENT APPLICATION

(11) **EP 4 583 205 A1**
(43) Date of publication of application: **09.07.2025**
(21) Application number: 23859869.2
(22) Date of filing: 18.07.2023
(51) Int. Cl.: H01M 4/38, C01B 33/02, C01B 33/32, H01M 4/36

(54) **NEGATIVE ELECTRODE ACTIVE MATERIAL FOR SECONDARY BATTERIES, AND SECONDARY BATTERY**

(30) Priority: 29.08.2022 JP 2022136247
(71) Applicant: Panasonic Intellectual Property Management Co., Ltd., Kadoma-shi, Osaka 571-0057 (JP)
(72) Inventor: SAITO, Yusuke, Kadoma-shi, Osaka 571-0057 (JP)
(74) Representative: Novagraaf International SA
(86) International application number: PCT/JP2023/026233
(87) International publication number: WO 2024/048099

(57) **Abstract**

A negative electrode active material for a secondary battery includes silicate composite particles each including a silicate phase and silicon phases. The silicon phases are dispersed in the silicate phase. The silicon phases contain phosphorus element in addition to silicon.

## Description

### [Technical Field]

The present invention mainly relates to an improvement of a negative electrode active material for a secondary battery.

### [Background Art]

Secondary batteries such as nonaqueous electrolyte secondaries have high voltage and high energy density and are therefore expected in recent years to be used as the power sources for compact consumer devices, power storage apparatuses, and electric cars. With increasing demand for higher battery energy density, a material containing silicon (Si), which can form an alloy with lithium, is expected as a negative electrode active material having high theoretical capacity density.

A material containing silicon, however, because of its high irreversible capacity, has a drawback in that the initial charge-discharge efficiency (esp., the ratio of the initial discharge capacity to the initial charge capacity) is low. To address this, various techniques have been proposed to introduce lithium in advance in an amount corresponding to the irreversible capacity, into the material containing silicon. Specifically, one proposal suggests using composite particles each including a lithium silicate phase and silicon particles dispersed in the lithium silicate phase. The silicon particles contribute to charge-discharge reactions (reversible absorption and release of lithium). The composite particles are produced by, for example, sintering a mixture of glassy lithium silicate powder and silicon particles in a high temperature and high pressure atmosphere.

Patent Literature 1 proposes "a negative electrode active material for a nonaqueous electrolyte secondary battery, comprising base particles each having a silicate phase containing Li, Si, and Mx (Mx: an element other than alkali metals, alkaline earth metals, and Si) and silicon particles dispersed in the silicate phase, wherein the content of each element relative to a total of elements other than oxygen in the silicate phase is 3 to 45 mol% for Li, 40 to 78 mol% for Si, and 1 to 40 mol% for Mx." The Mx includes at least one of Al, B, Bi, Sb, Ge, Zr, Ti, P, V, W, and La. Patent Literature 2 proposes "a negative electrode active material for a secondary battery, comprising silicate composite particles each including silicon particles and a silicate phase, wherein the silicon particles are dispersed in the silicate phase, and the silicon particles contain at least one first element selected from the group consisting of germanium and aluminum."

### [Citation List]

### [Patent Literature]

Patent Literature 1: International Publication WO2019/065766
Patent Literature 2: International Publication WO2021/153078

### [Summary of Invention]

### [Technical Problem]

One of the objectives of the present disclosure is to improve the initial charge-discharge efficiency by improving the electron conductivity of the silicon phases.

### [Solution to Problem]

One aspect of the present disclosure relates to a negative electrode active material for a secondary battery, including silicate composite particles each including a silicate phase and silicon phases, wherein the silicon phases are dispersed in the silicate phase, and the silicon phases contain phosphorus element in addition to silicon.

Another aspect of the present disclosure relates to a secondary battery, including: a negative electrode containing the above-described negative electrode active material for a secondary battery; a positive electrode; and a nonaqueous electrolyte.

### [Advantageous Effects of Invention]

The inclusion of phosphorus element in the silicon phases improves the electron conductivity of the silicon phases, to reduce the powder resistivity of the silicate composite particles. As a result, the initial charge-discharge efficiency can be improved.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic sectional view of a silicate composite particle according to one embodiment of the present invention.
[FIG. 2] A partially cut-away schematic oblique view of a secondary battery according to one embodiment of the present invention.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

In the following description, the term "comprise" or "include" is an expression including meanings of "comprise (or include)," "essentially consist of," and "consist of."

Secondary batteries include at least nonaqueous electrolyte secondary batteries, such as lithium-ion batteries, lithium-metal secondary batteries, and all-solid-state batteries.

The negative electrode active material for a secondary battery according to the present embodiment includes silicate composite particles. The silicate composite particles mean particles containing a silicate phase and another material. Here, the silicate composite particles are particles each containing a silicate phase and silicon phases. The silicon phases are dispersed in the silicate phase. The silicon phases contain phosphorus element (P).

The silicon phases containing phosphorus element (P) are, for example, a phase constituted of 90 atom% or more of silicon. At least part of the silicon phases may be a phase of simple silicon (Si). The silicon phases may be amorphous, and may be constituted of minute crystallites.

The silicon phases may be a particulate phase. The silicon phases may be a phase other than particulate. The silicate composite particle may have a sea-island structure in which the silicate phase constitutes a sea portion (matrix) and the silicon phases constitute a plurality of island portions. Adjacent particulate phases may be partially continuous with each other. The silicon phases may be a mesh-like phase.

The silicate composite particles are manufactured by, for example, mixing silicate powder and silicon particles, pulverizing the mixture in a ball mill or the like, and sintering the pulverized mixture in a high temperature and high pressure atmosphere.

The capacity of the silicate composite particles having the configuration as above can be controlled as desired by controlling the amount of the silicon phases dispersed in the silicate phase. It is therefore possible to increase the capacity of the silicate composite particles. In addition, since the silicon phases are dispersed in the silicate phase, the stress associated with expansion and contraction of the silicon phases during charging and discharging is relaxed by the silicate phase. It is therefore possible to reduce cracking and breakage of the silicate composite particles. Furthermore, high capacity and improved cycle characteristics of the battery can be both easily achieved.

The introduction of phosphorus element into the silicon phases improves the initial charge-discharge efficiency, presumably for the following reasons.

First, the silicon phases are heated in the manufacturing process of the silicate composite particles. In the case of forming a coating layer (e.g., a conductive coating layer containing a carbon material) on surfaces of the silicate composite particles, in that process, too, the silicate composite particles are heated to high temperature, together with the raw material of the coating layer. Heating has an effect of facilitating the crystal growth of silicon. On the other hand, when phosphorus element is introduced into the silicon phases, the crystal growth of silicon during heating is inhibited by the presence of the phosphorus element. As a result, the crystallite size of the silicon phases can be reduced. The smaller the crystallite size is, the more likely the stress due to expansion and contraction of the silicon phases is to be relaxed. Therefore, during initial charging and discharging, when the silicon phases expand and then contract, the electron-conductive network of the silicon phases is unlikely to be broken. As a result, the improvement in initial charge-discharge efficiency and the improvement in cycle characteristics can be both easily achieved. Moreover, the effect of reducing cracking and breakage of the silicate composite particles can be also enhanced.

Next, the phosphorus element contained in the silicon phases have the effect of enhancing the electron conductivity of the silicon phases themselves. This results in reduced powder resistivity of the silicate composite particles, and improved initial charge-discharge efficiency. Due to low electron conductivity of the silicate phase, most of the electron-conductive network in the silicate composite particle is formed by the silicon phases. When the electron conductivity of the silicon phases themselves has been enhanced, even if the electron-conductive network of the silicon phases is partially broken during initial charging and discharging, they are less susceptible to such breaking. Therefore, the initial charge-discharge efficiency is further improved.

The improvement mechanism of the electron conductivity of the silicon phases is inferred as follows. At least part of the phosphorus element is considered to have been substituted in the form of phosphorus atom in a crystal lattice site of silicon in the silicon phases. With phosphorus element (P) having a valence of 5 being doped in a crystal lattice of silicon (Si) having a valence of 4, surplus electrons for maintaining electrical neutrality are introduced into the silicon phases. This is considered to result in significantly improved electron conductivity of the silicon phases. The phosphorus atom can dissolve in the silicon phases, to form a solid solution.

Furthermore, the silicon phases can deform gradually associated with repeated charging and discharging. For example, in a silicate composite particle having a sea-island structure, adjacent island portions (silicon phases) come in partial contact with each other, which can strengthen the electron-conductive network. As a result, not only in the initial stage, the charge-discharge efficiency can be further improved. The silicon phases can form a mesh-like electron-conductive network during charge-discharge cycles.

The phosphorus element (P) may be present in the silicon phases in any form, such as a simple substance, a compound, a polyanion, a radical, and an atom.

In the silicon phases, at least part of the phosphorus element may constitute a PO structure. For example, the phosphorus element may form a polyanion having a stable bond with an oxygen atom. Because of high affinity for both silicon atoms and phosphorus atoms of oxygen atoms, a polyanion containing oxygen can be easily doped into the silicon phases.

In the PO structure, the bond between P and O may be a single bond (P-O), may be a double bond (P=O), and may be a bond intermediate therebetween.

The PO structure may be contained in a phosphoric acid-based compound, such as a phosphate anion, a phosphite anion, a phosphonate anion, and a phosphinate anion. In particular, the PO structure preferably constitutes a PO₃ structure in that it is easy to be contained in the silicon phases, and phosphoric acid of a raw material is inexpensive.

The PO₃ structure may be contained in a polyanion, such as PO₃³⁻, HPO₃²⁻, and H₂PO₃⁻. Such a polyanion may form a salt, such as phosphoric acid salt.

A peak derived from the PO₃ structure is observed in the range of 134.0 or more and 134.6 eV or less in the spectrum obtained by X-ray photoelectron spectroscopy (XPS) of the silicon phases containing the PO₃ structure.

The size of the crystallites constituting the silicon phases (hereinafter also simply referred to as "crystallite size") is, for example, 30 nm or less, may be 20 nm or less, and may be 15 nm or less. In this case, the volume change amount due to the expansion and contraction of the silicon phases associated with charging and discharging can be reduced, and the charge-discharge efficiency and the cycle characteristics can be improved. The lower limit value of the crystallite size of the silicon phases is, although not limited to, for example, 1 nm. An example of a preferred range of the crystallite size of the silicon phases is, for example, 1 nm or more and 20 nm or less.

The crystallite size of the silicon phases is calculated using the Scherrer's formula from the half-value width of a diffraction peak belonging to the Si (111) plane in an X-ray diffraction (XRD) pattern of the silicon phases.

The average particle diameter of the silicon phases (in the case of a sea-island structure, the average particle diameter of the island portions), for example, may be 1 nm or more, and may be 5 nm or more. This average particle diameter is, for example, 1000 nm or less, may be 500 nm or less, may be 200 nm or less, and may be 100 nm or less, or 50 nm or less. Such fine silicon phases are preferable in that they undergo small volume changes during charging and discharging, leading to improved structural stability of the silicate composite particles. An example of a preferred range of the average particle diameter of the silicon phases is 1 nm or more and 1000 nm or less.

The average particle diameter of the silicon phases can be measured by observing a cross section of the silicate composite particle using a SEM (scanning electron microscope) or TEM (transmission electron microscope). Specifically, the maximum diameters of 100 randomly selected silicon phases in the form of particles or islands are averaged.

The ratio of phosphorus element contained in the silicon phases may be within a range that does not significantly impair the capacity of the silicon phases. As long as within such a range, phosphorus element may be contained in the silicon phases in an amount that exceeds the solid solubility limit into the silicon phases. The ratio of the phosphorus element contained in the silicon phases, for example, may be 10 mass% or less, and 5 mass% or less. On the other hand, the ratio of phosphorus element contained in the silicon phases may be very small. For example, the ratio of the phosphorus element contained in the silicon phases may be 0.001 mass% or more, may be 0.005 mass% or more, may be 0.01 mass% or more, and may be 0.2 mass% or more. An example of a preferred range of the ratio of the phosphorus element contained in the silicon phases is 0.01 mass% or more and 10 mass% or less.

The ratio of the phosphorus element contained in the silicon phases can be determined, with respect to the silicate composite particles taken out from the battery, by performing inductively coupled plasma atomic emission spectroscopy (ICP-AES), by performing energy dispersive X-ray spectroscopy (EDX) analysis on an electron image obtained with a transmission electron microscope (TEM) or a scanning electron microscope (SEM) of a cross section of a silicate composite particle, or by combining both of these analyses. Even when phosphorus element is contained in both the silicate phase and the silicon phases, the ratio of the phosphorus element contained in the silicon phases can be calculated by using, for example, SEM-EDX.

In the case of performing EDX, a cross section of the silicate composite particle can be obtained by, for example, disassembling the battery in a fully discharged state, to take out the negative electrode, and washing the negative electrode with anhydrous ethyl methyl carbonate or dimethyl carbonate, followed by drying. This is followed by processing with a cross section polisher (CP) to obtain a cross section of the negative electrode mixture layer. Next, the cross section of the negative electrode mixture layer is observed using a TEM or SEM.

In the case of performing IPC-AES, from the negative electrode dried after washing with anhydrous ethyl methyl carbonate or dimethyl carbonate, the negative electrode mixture is peeled off, and crushed in a mortar, to obtain a sample powder. Next, the sample powder is dried for 1 hour in a dry atmosphere, and immersed in weakly boiled 6M hydrochloric acid for 10 minutes. Next, the sample powder is washed with ion-exchanged water, filtered, and dried at 200 °C for 1 hour. This is followed by heating to 900 °C in an oxygen atmosphere to remove the carbon component, and thus, the silicate composite particles only can be isolated.

The silicate phase contains a metal element M, Si, and O (oxygen). The metal element M desirably includes at least one element E1 selected from the group consisting of an alkali metal element and a Group II element. The element E1 may be, for example, at least one element selected from the group consisting of Li, Na, K, Cs, Mg, Ca, Sr, and Ba.

The silicate phase may further contain an element E2 other than the element E1. The element E2 may be at least one element selected from the group consisting of zirconium, niobium, tantalum, lanthanum, vanadium, titanium, phosphorus, bismuth, zinc, tin, lead, antimony, cobalt, fluorine, tungsten, aluminum, and boron.

In particular, it is desirable that the silicate phase is a lithium silicate phase containing Li as an element E1, in terms of excellent lithium-ion conductivity. That is, it is desirable that the silicate phase is mainly composed of the lithium silicate phase. In other words, the ratio of Li to the metal elements other than Si contained in the silicate phase is desirably 50 atom% or more, more desirably 70 atom% or more, further more preferably 90 atom% or more.

In the silicate phase, the composition of Si, Li, and O is represented by, for example, a formula: Li_{2z}SiO_{2+z}, where 0 < z < 2. Preferably, the range of z is 0 < z < 1, more preferably z = 1/2. In a preferred embodiment, most of the Si constitutes a lithium silicate. The lithium silicate desirably contains Li₂Si₂O₅ as a major component, and desirably, Li₂Si₂O₅ is a major component of the whole silicate phase. Here, the "major component" refers to a component occupying 50 mass% or more of the mass of the whole lithium silicate or the whole silicate phase, and may be a component occupying 70 mass% or more.

The ratio of each element contained in the silicate phase can be determined by any of the following methods. From the content ratio of each element, the composition of the silicate phase can be calculated.

### <EDX>

From a cross-sectional backscattered electron image of the silicate composite particles described above, 10 composite particles having a maximum particle diameter of 5 µm or more are randomly selected, to perform an elemental mapping analysis by energy dispersive X-ray (EDX) on each particle. The area percentage of the target element is calculated using an image analysis software. The observation magnification is desirably 2,000 to 20,000 times. The measured values of the area percentage of the predetermined element contained in the 10 particles are averaged. From the obtained average value, the content ratio of the target element can be calculated.

Desirable cross-sectional SEM-EDX analysis measurement conditions are shown below.

### <SEM-EDX measurement conditions>

Processing apparatus: SM-09010 (Cross Section Polisher), available from JEOL
Processing conditions: accelerating voltage 6 kV
Current value: 140 µA
Degree of vacuum: 1 × 10⁻³ to 2×10⁻³ Pa
Measuring apparatus: Electron microscope SU-70 available from HITACHI
Acceleration voltage during analysis: 10 kV
Field: Free mode
Probe current mode: Medium
Probe current range: High
Anode Ap.: 3
OBJ Ap.: 2
Analysis area: 1 µm square
Analysis software: EDAX Genesis
CPS: 20,500
Lsec: 50
Time constant: 3.2

### <AES>

From a cross-sectional backscattered electron image of the already-described silicate composite particles, 10 composite particles having a maximum particle diameter of 5 µm or more are randomly selected, to perform a qualitative/quantitative analysis of elements on each particle using an Auger electron spectroscopy (AES) analyzer (e.g., JAMP-9510F, available from JEOL Corporation). The measurement conditions may be set such that, for example, the acceleration voltage is 10 kV, the beam current is 10 nA, and the analysis region is 20 µmϕ. The content amount can be calculated by averaging the amounts of a predetermined element contained in the 10 particles.

During charging and discharging, due to the decomposition of the nonaqueous electrolyte and the like, a surface film is formed on surfaces of the silicate composite particles. The mapping analysis by EDX or AES are performed within 1 µm or more inward from the peripheral edge of the cross section of the composite particle, so that the thin surface film and the conductive layer are not included in the measurement range. The measurement of the sample is preferably performed before cycling or in the early stage of cycling because, in the late stage of cycling, it is difficult to make a distinction from the decomposition product of the nonaqueous electrolyte.

### <ICP>

A sample of the silicate composite particles is completely dissolved in a heated acid solution (a mixed acid of hydrofluoric acid, nitric acid, and sulfuric acid), and carbon in the residue of dissolution is removed by filtration. Then, the obtained filtrate is analyzed by inductively coupled plasma emission spectroscopy (ICP), to measure a spectral intensity of each element. Subsequently, using a commercially available standard solution of the element, a calibration curve is drawn, from which the amount of each element contained in the composite particles is calculated.

Other techniques can be used for quantification of each element, such as electron microanalyzer (EPMA), laser ablation ICP mass analysis (LA-ICP-MS), and X-ray photoelectron spectroscopy (XPS).

The amounts of B, Na, K, and Al contained in the silicate phase can be quantitatively analyzed in accordance with JIS R3105 (1995) (method for chemical analysis of borosilicate glass).

In the composite particles, a silicate phase and silicon phases are present. The Si content obtained by the above method is the sum of the amount of Si constituting the silicon phases and the amount of Si in the silicate phase. On the other hand, the amount of Si constituting the silicon phases can be separately determined by Si-NMR. Therefore, by using Si-NMR, the amount of Si constituting the silicon phases and the amount of Si in the silicate phase can be separately determined. Note that, as the standard substance necessary for quantitative determination, a mixture containing a silicate phase whose Si content is already known and silicon phases in a predetermined ratio may be used.

Desirable Si-NMR measurement conditions are shown below.

### <Si-NMR measurement conditions>

Measuring apparatus: Solid nuclear magnetic resonance spectrometer (INOVA-400), available from Varian, Inc.
Probe: Varian 7 mm CPMAS-2
MAS: 4.2 kHz
MAS speed: 4 kHz
Pulse: DD (45° pulse + signal capture time 1H decoupling)
Repetition time: 1200 sec to 3000 sec
Observation width: 100 kHz
Observation center: around -100 ppm
Signal capture time: 0.05 sec
Accumulated number of times: 560
Sample amount: 207.6 mg

In order to achieve high capacity and improved cycle characteristics, the silicon phase content in the lithium silicate composite particles is, for example, 30 mass% or more and 80 mass% or less. By setting the silicon phase content to 30 mass% or more, the proportion of the silicate phase is reduced, and the initial charge-discharge efficiency can be easily improved. By setting the silicon phase content to 80 mass% or less, it becomes easier to reduce the degree of expansion and contraction of the silicate composite particles during charging and discharging. The silicon phase content in the silicate composite particles is preferably 40 mass% or more, more preferably 50 mass% or more.

A coating layer may be present on surfaces of the silicate composite particles. The coating layer is provided, for example, in order to improve the conductivity of the silicate composite particles. Such a coating layer may contain a carbon material. The coating layer covers at least part of the surfaces of the silicate composite particles. Since the silicate phase is poor in electrical conductivity, the conductivity of the silicate composite particles also tends to be low. However, the presence of a coating layer containing a conductive material on surfaces of the silicate composite particles can drastically improve the electrical conductivity.

The thickness of the coating layer is preferably thin enough not to substantially affect the average particle diameter of the silicate composite particles. Considering the securing of electrical conductivity and the diffusibility of ions that contribute to charging and discharging, the thickness of the coating layer is preferably 1 to 200 nm, more preferably 5 to 100 nm. The thickness of the coating layer can be measured by observing a cross section of the silicate composite particles using a SEM or a TEM.

The carbon material constituting the coating layer preferably contains at least one selected from the group consisting of a carbon compound and a carbonaceous material. As the carbon compound, a compound containing carbon and hydrogen, and a compound containing carbon, hydrogen, and oxygen are exemplified. As the carbonaceous material, amorphous carbon with low crystallinity, graphite with high crystallinity, and the like can be used. Examples of the amorphous carbon include carbon black, coal, coke, charcoal, and activated carbon. Examples of the graphite include natural graphite, artificial graphite, and graphitized mesophase carbon particles. In particular, amorphous carbon is preferred because of its low hardness, and large buffering effect on the silicon phases that undergo volume changes during charging and discharging. The amorphous carbon may be graphitizable carbon (soft carbon), and non-graphitizable carbon (hard carbon). Examples of the carbon black include acetylene black, and Ketjen black.

Next, an example of a manufacturing method of silicate composite particles will be described in detail.

### Step (i)

Lithium silicate is prepared. The raw material to be used is a raw material mixture containing a Si-containing raw material and a Li raw material in a predetermined ratio. The raw material mixture may contain the aforementioned alkali metal element, Group II element, and/or element M. A lithium silicate is synthesized by melting the above raw material mixture, and passing the melt between metal rolls, into flakes. Then, flakes of the lithium silicate are crystalized by heat treatment in an atmospheric air at a temperature equal to or higher than the glass transition point, and equal to or lower than the melting point. Alternatively, flakes of the lithium silicate may be used without being crystalized. A lithium silicate can also be produced by firing the mixture, without being melted, at a temperature equal to or lower than the melting point, to cause a solid-phase reaction.

As the Si raw material, silicon oxide can be used. As the Li raw material, for example, lithium carbonate, lithium oxide, lithium hydroxide, lithium hydride, and the like can be used. These may be used singly or in combination of two or more kinds. For the raw materials of the alkali metal element, Group II element, and element M, an oxide, a hydroxide, a carbonate compound, a hydride, a nitrate, a sulfate, etc. of each element can be used.

The unreacted Si raw material may remain in the lithium silicate. The remaining Si raw material is dispersed as silicon oxide phases in the lithium silicate.

### Step (ii)

The prepared lithium silicate is blended with raw material silicon, to form a composite of them. The raw material silicon contains a predetermined amount of phosphorus element (P). For example, the silicate composite particles are prepared through the following steps (a) to (c). There is no particular limitation on the method for allowing phosphorus element (P) to be contained in silicon. For example, phosphorus element can be doped into raw material silicon by vapor-depositing POCl₃ diluted with a mixed gas of nitrogen and oxygen onto silicon at a high temperature. If phosphorus glass is attached to the silicon surfaces doped with phosphorus element, the phosphorus glass is to be removed by treating the silicon surfaces with HF.

### Step (a)

Powder of raw material silicon and powder of the lithium silicate are mixed in a mass ratio of, for example, 20:80 to 95:5. The raw material silicon may be coarse silicon particles having an average particle diameter of about several µm to several tens of µm. The coarse particles contain a predetermined amount of phosphorus element (P).

### Step (b)

Next, using a pulverizer like a ball mill, the mixture of the raw material silicon and the lithium silicate is pulverized while being micronized, to form them into a composite. An organic solvent may be added to the mixture, to perform wet pulverization. A predetermined amount of an organic solvent may be fed all at once into a pulverizing container at the early stage of pulverization, or may be fed dividedly in a plurality of times into a pulverizing container in the course of pulverization. The organic solvent serves to prevent an object to be pulverized from attaching to the inner wall of the pulverizing container.

As the organic solvent, an alcohol, an ether, a fatty acid, an alkane, a cycloalkane, a silicate ester, a metal alkoxide, and the like can be used.

The raw material silicon and the lithium silicate may be micronized separately, and mixed together. Alternatively, without using a pulverizer, silicon nanoparticles and amorphous lithium silicate nanoparticles may be prepared, which may be mixed together. For the production of nanoparticles, a known method, such as a gas phase method (e.g., plasma method) and a liquid phase method (e.g., liquid phase reduction method), may be used.

### Step (c)

The mixture is heated under pressure to 450 °C to 1000 °C in an inert gas atmosphere (e.g., an atmosphere of argon, nitrogen, etc.), to be sintered. For sintering, a sintering apparatus capable of applying pressure in an inert atmosphere, such as a hot press and a discharge plasma sintering furnace, can be used. During sintering, the lithium silicate softens and flows so as to fill the gaps between the silicon particles. As a result, a dense block of sintered body including the silicate phase as a sea portion and silicon particles as island portions can be obtained.

Pulverizing the resultant sintered body can provide silicate composite particles. Silicate composite particles having a predetermined average particle diameter can be obtained by appropriately selecting the pulverization conditions. The average particle diameter of the silicate composite particles is, for example, 1 to 20 µm. The average particle diameter of the silicate composite particles means a particle diameter at 50% cumulative volume (volume average particle diameter) in a particle size distribution measured by a laser diffraction and scattering method.

The sintering may be performed by rolling a powder of the mixture that has been molded in a sheet form in advance, in a heated state. The rolling is usually performed by passing the sheet of the mixture through the gap between two rotating rolls. By passing the sheet of the mixture through the gap between the heated rolls, heating and pressure application to the mixture can be performed simultaneously. The sheet of the mixture before passing and/or after passed through the rolls may be heated. By performing heat treatment while rolling the mixture molded in a sheet form, the silicate composite particles can be produced with high productivity.

### Step (iii)

On at least part of the surfaces of the obtained silicate composite particles, a coating layer may be formed by coating with a conductive material. The conductive material is preferably electrochemically stable, and is preferably a conductive carbon material. The method of coating surfaces of the silicate composite particles with a conductive carbon material includes a CVD method using a hydrocarbon gas, such as acetylene or methane, as a raw material. Also, a method of mixing coal pitch, petroleum pitch, phenolic resin, or the like with the silicate composite particles and carbonizing them by heating can be used. A mixture of the silicate composite particles and the raw material of a conductive carbon material, such as coal pitch, petroleum pitch, or phenolic resin, is heated at 700 °C to 950 °C in an inert atmosphere (e.g., an atmosphere of argon, nitrogen, etc.). Alternatively, carbon black may be attached to surfaces of the silicate composite particles.

### Step (iv)

A step of washing the silicate composite particles (including those having a coating layer on their surfaces) with an acid may be performed. For example, by washing the silicate composite particles with an acidic aqueous solution, a very small amount of alkaline component that may be generated when forming the raw material silicon and the lithium silicate into a composite can be removed. The acidic aqueous solution that can be used includes an aqueous solution of an inorganic acid, such as hydrochloric acid, hydrofluoric acid, sulfuric acid, nitric acid, phosphoric acid, or carbonic acid, and an aqueous solution of an organic acid, such as citric acid or acetic acid.

In (c) of the step (ii) and the step (iii), in which a heat treatment at a relatively high temperature is involved, the crystallite size of silicon in the silicate composite particles may increase with heating. In this regard, by allowing phosphorus element (P) to be contained in the silicon phases, the increase in the crystallite size of silicon can be suppressed.

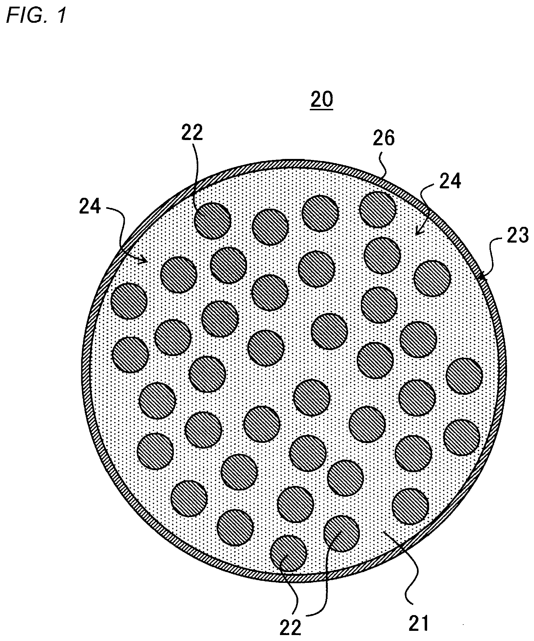

FIG. 1 is a schematic sectional view of an example of a silicate composite particle 20. A base particle 23 includes a lithium silicate phase 21, and silicon particles 22 dispersed in the lithium silicate phase 21. The silicon particles 22 contain phosphorus element. The base particle 23 has a sea-island structure 24 in which fine silicon particles are dispersed in a matrix of the lithium silicate phase 21. The surface of the base particle 23 is coated with a coating layer 26, forming a silicate composite particle 20.

The base particle 23 may include another component, in addition to the lithium silicate phase 21 and the silicon particles 22. For example, in view of improving the strength of the base particle 23, a reinforcing material including an oxide such as ZrO₂ and a carbide, a carbon material, a silicon oxide phase, and the like may be included in an amount of less than 10 wt% of the base particle 23.

A secondary battery according to an embodiment of the present disclosure includes a positive electrode, a negative electrode, and a nonaqueous electrolyte. A separator may be interposed between the positive electrode and the negative electrode.

### [Negative electrode]

The negative electrode includes, for example, a negative electrode current collector, and a negative electrode mixture layer formed on a surface of the negative electrode current collector and containing a negative electrode active material. The negative electrode mixture layer is constituted of a negative electrode mixture. The negative electrode mixture layer can be formed by applying a negative electrode slurry of a negative electrode mixture dispersed in a dispersion medium, onto a surface of the negative electrode current collector, followed by drying. The coating film after drying may be rolled, as necessary. The negative electrode mixture layer may be formed on one surface or both surfaces of the negative electrode current collector.

The negative electrode mixture contains a negative electrode active material as an essential component, and may contain a binder, a conductive agent, a thickener, and the like as optional components. The negative electrode active material contains the already-described silicate composite particles. The silicate composite particles contain silicon phases, which contributes to achieving high capacity of the negative electrode.

The negative electrode active material may further contain another active material that electrochemically absorbs and releases lithium ions. Preferred as another active material is, for example, a carbon-based active material. The silicate composite particles expand and contract in volume in association with charging and discharging. Therefore, increasing the ratio of the silicate composite particles in the negative electrode active material tends to cause a contact failure between the negative electrode active material and the negative electrode current collector. However, by using the silicate composite particles and a carbon-based active material in combination, excellent cycle characteristics can be achieved, while a high capacity of the silicon particles can be imparted to the negative electrode. The ratio of the silicate composite particles to the total of the silicate composite particles and the carbon-based active material is preferably, for example, 0.5 to 15 mass%, more preferably 1 to 10 mass%. This makes it easy to achieve high capacity as well as improved cycle characteristics.

Examples of the carbon-based active material include graphite, graphitizable carbon (soft carbon), and non-graphitizable carbon (hard carbon). In particular, graphite is preferred because of its excellent charge-discharge stability and small irreversible capacity. Graphite means a material having a graphite-like crystal structure, and includes, for example, natural graphite, artificial graphite, graphitized mesophase carbon particles, and the like. The carbon-based active material may be used singly or in combination of two or more.

As the negative electrode current collector, a non-porous conductive substrate (metal foil, etc.), and a porous conductive substrate (mesh, net, punched sheet, etc.) are used. Examples of the material of the negative electrode current collector include stainless steel, nickel, nickel alloy, copper, and copper alloy. The thickness of the negative electrode current collector is, although not limited to, preferably 1 to 50 µm, more preferably 5 to 20 µm, in view of the balance between high strength and lightweight of the negative electrode.

Examples of the binder include fluorocarbon resins, polyolefin resins, polyamide resins, polyimide resins, vinyl resins, styrene-butadiene copolymer rubber (SBR), polyacrylic acids, and derivatives thereof. These may be used singly or in combination of two or more kinds.

Examples of the conductive agent include carbon black, conductive fibers, carbon fluoride, and organic conductive materials. These may be used singly or in combination of two or more kinds.

Examples of the thickener include carboxymethyl cellulose (CMC), and polyvinyl alcohol. These may be used singly or in combination of two or more kinds.

Examples of the dispersion medium include water, alcohols, ethers, N-methyl-2-pyrrolidone (NMP), and mixed solvents thereof.

### [Positive electrode]

The positive electrode include, for example, a positive electrode current collector, and a positive electrode mixture layer formed on a surface of the positive electrode current collector. The positive electrode mixture layer is constituted of a positive electrode mixture. The positive electrode mixture layer can be formed by applying a positive electrode slurry of a positive electrode mixture dispersed in a dispersion medium, onto a surface of the positive electrode current collector, followed by drying. The applied film after drying may be rolled, as necessary. The positive electrode mixture layer may be formed on one surface or both surfaces of the positive electrode current collector.

The positive electrode mixture contains a positive electrode active material as an essential component, and can contain a binder, a conductive agent, and the like, as optional components.

As the positive electrode active material, for example, a lithium-containing composite oxide can be used. Examples thereof include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O_{4,} LiMePO_{4,} Li₂MePO₄F. Here, M is at least one selected from the group consisting of Na, Mg, Sc, Y, Mn, Fe, Co, Ni, Cu, Zn, Al, Cr, Pb, Sb, and B. Me contains at least a transition element (e.g., contains at least one selected from the group consisting of Mn, Fe, Co, and Ni). Here, 0 ≤ a ≤ 1.2, 0 ≤ b ≤ 0.9, and 2.0 ≤ c ≤ 2.3. The value "a" representing the molar ratio of lithium increases and decreases during charging and discharging.

As the binder and the conductive agent, for example, those selected from the materials exemplified for the negative electrode can be used as desired. As the conductive agent, graphite, such as natural graphite and artificial graphite, may also be used.

As the positive electrode current collector, a non-porous conductive substrate (metal foil, etc.), and a porous conductive substrate (mesh, net, punched sheet, etc.) are used. Examples of the material of the positive electrode current collector include stainless steel, aluminum, aluminum alloy, and titanium. The thickness of the positive electrode current collector is, although not limited to, preferably 1 to 50 µm, more preferably 5 to 20 µm, in view of the balance between high strength and lightweight of the positive electrode.

### (Nonaqueous electrolyte)

The nonaqueous electrolyte has lithium ion conductivity. The nonaqueous electrolyte may be a liquid electrolyte (electrolyte solution) or a solid electrolyte.

The liquid electrolyte (electrolyte solution) contains a solvent and a lithium salt dissolved in the solvent. The concentration of the lithium salt in the electrolyte solution is, for example, 0.5 to 2 mol/L. The electrolyte solution may contain a known additive.

For the solvent, a nonaqueous solvent is used. As the nonaqueous solvent, for example, a cyclic carbonic acid ester, a chain carbonic acid ester, a cyclic carboxylic acid ester, and the like are used. Examples of the cyclic carbonic acid ester include propylene carbonate (PC), and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). The nonaqueous solvent may be used singly or in combination of two or more kinds.

As the lithium salt, for example, a lithium salt of a chlorine-containing acid (LiClO₄, LiAlCl₄, LiB₁₀Cl₁₀, etc.), a lithium salt of a fluorine-containing acid (LiPF₆, LiBF₄, LiSbF₆, LiAsF₆, LiCF₃SO₃, LiCF₃CO₂, etc.), a lithium salt of a fluorine-containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.), and the like can be used. The lithium salt may be used singly or in combination of two or more kinds.

As the solid electrolyte, for example, a solid or gel polymer electrolyte, an inorganic solid electrolyte, and the like can be used. As the inorganic solid electrolyte, for example, a known material for use in all-solid-state lithium-ion secondary batteries and the like can be used. Examples of such a material include oxide-based solid electrolytes, sulfide-based solid electrolytes, and halogen-based solid electrolytes. The polymer electrolyte includes, for example, a lithium salt and a matrix polymer. The polymer electrolyte may further include a nonaqueous solvent. The matrix polymer may be, for example, a polymer material that absorbs a nonaqueous solvent and turns into a gel. Examples of the polymer material include fluorocarbon resins, acrylic resins, and polyether resins.

### [Separator]

It is desirable to interpose a separator between the positive electrode and the negative electrode. The separator is excellent in ion permeability and has moderate mechanical strength and electrically insulating properties. As the separator, for example, a microporous thin film, a woven fabric, a nonwoven fabric, and the like can be used. As the material of the separator, polyolefin, such as polypropylene and polyethylene, can be used.

One example of the structure of the secondary battery is a structure in which an electrode group formed by winding the positive electrode and the negative electrode with the separator interposed therebetween is housed in an outer body, together with the electrolyte. Alternatively, instead of the wound electrode group, another form of an electrode group may be adopted, such as a stacked electrode group formed by stacking the positive electrode and the negative electrode with the separator interposed therebetween. The secondary battery may be in any form, such as cylindrical type, prismatic type, coin type, button type, and laminate type.

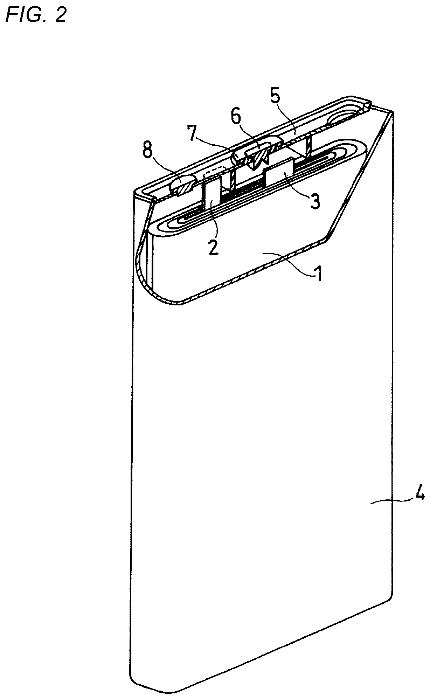

FIG. 2 is a partially cut-away schematic oblique view of a prismatic secondary battery according to one embodiment of the present invention. The battery includes a bottomed prismatic battery case 4, an electrode group 1 and an electrolyte (not shown) housed in the battery case 4, and a sealing plate 5 sealing the opening of the battery case 4. The electrode group 1 is formed by winding a long belt-like negative electrode, a long belt-like positive electrode, and a separator interposed therebetween around a flat winding core, and then removing the winding core. The sealing plate 5 has a liquid injection port closed with a sealing plug 8, and a negative electrode terminal 6 insulated from the sealing plate 5 via a gasket 7. A negative electrode current collector and a negative electrode terminal 6 are electrically connected to each other by a negative electrode lead 3. A positive electrode current collector and the sealing plate 5 are electrically connected to each other by a positive electrode lead 2. On top of the electrode group 1, a resin frame body providing separation between the electrode group 1 and the sealing plate 5 and providing separation between the negative electrode lead 3 and the battery case 4 is disposed.

In the following, the present disclosure will be specifically described by way of Examples and Comparative Examples. The present disclosure, however, is not limited to the following Examples.

### <Examples 1 to 3>

### [Preparation of silicate]

Lithium carbonate and silicon dioxide were mixed in a molar ratio of Li₂CO₃:SiO₂ = 34:66. The mixture was heated to melt in an inert gas atmosphere at 1500 °C for 5 hours, and the melt was passed between metal rolls, into flakes. The product in the form of flakes was heated at 750 °C for 5 hours, to produce lithium silicate. The lithium silicate was then pulverized to have an average particle diameter of 10 µm.

### [Preparation of silicate composite particles]

The lithium silicate having an average particle diameter of 10 µm and silicon coarse particles (average particle diameter 10 µm) containing phosphorus element (P) at a ratio shown in Table 1 were mixed in a mass ratio of 40:60. The mixture was packed in a pot (made of SUS, volume: 500 mL) of a planetary ball mill (P-5, available from Fritsch Co., Ltd.). Then, 24 SUS balls (diameter 20 mm) were put into the pot, and with the lid closed, the mixture was pulverized at 200 rpm for 25 hours in an inert atmosphere, to form silicon and the lithium silicate into a composite.

In the spectrum obtained by X-ray photoelectron spectroscopy of the silicon coarse particles containing phosphorus element (P), a peak derived from the PO₃ structure was observed around 134.0 to 134.6 eV.

Then, the pulverized product was pressure-molded at room temperature into a sheet of 4 to 5 mm thick, to obtain a sheet-like molded body. The molded body was heated to 800 °C and rolled between rolling rolls, to obtain a sintered body. The rolling was performed so that the molded body was applied with a pressure of 240 MPa. The sintered body was pulverized, and passed through a 40-µm mesh, into silicate composite particles.

### [Formation of coating layer]

The silicate composite particles were mixed with coal pitch (MCP250, available from JFE Chemical Corporation). The mixture was fired at 800 °C for 5 hours in an inert atmosphere, to form a coating layer of conductive carbon on surfaces of the silicate composite particles. The ratio of the mass of the coating layer to the total mass of the silicate composite particles and the coating layer was set to 5%. Then, using a sieve, the silicate composite particles including a coating layer and having an average particle diameter of 5 µm were obtained.

With respect to the pulverized product after formed into a composite (pre-sintering particles A) before sintering (before pressure-molding into a sheet), and the silicate composite particles with a coating layer (post-sintering particle B) after sintering, XRD analysis was performed, to measure a half-value width of a peak derived from the Si (111) plane. From the half-value width of the peak, the crystallite size was calculated from the Scherrer's formula.

The crystallite size of the silicon phases contained in the pre-sintered particles A and the post-sintering particles B, and the volume resistivity (powder resistivity) are shown in Table 1.

The cross section of the silicate composite particle was analyzed by SEM-EDX in the already-described manner. The result confirmed that phosphorus element was contained in the silicon phases at a ratio shown in Table 1. On the other hand, no phosphorus element was detected in the silicate phase.

The silicate composite particles obtained using silicon coarse particles having phosphorus element (P) contents of 0.01 mass%, 0.1 mass%, and 1 mass% are referred to as silicate composite particles A1, A2, and A3, respectively.

**[Table 1]**

| silicate composite particles | P element / Ge element | | crystallite diameter (nm) | | volume resistivity |
|---|---|---|---|---|---|
| | element | content (mass%) | pre-sintering particles A | post-sintering particles B | (Ω·cm) |
| B1 | - | 0 | 13.8 | 16.3 | 300 |
| B2 | Ge | 1 | - | - | - |
| A1 | P | 0.01 | 13.7 | 16.1 | 84.6 |
| A2 | P | 0.1 | 12.0 | 14.1 | 1.8 |
| A3 | P | 1 | 11.6 | 13.4 | 0.4 |

### [Production of negative electrode]

Silicate composite particles and graphite were mixed in a mass ratio of (5 to 20) : (95 to 80), and used as a negative electrode active material. The negative electrode active material, sodium carboxymethylcellulose (CMC-Na), styrene-butadiene rubber (SBR), and lithium polyacrylate were mixed in a mass ratio of 96.5:1:1.5:1, to which water was added, and then, the mixture was stirred using a mixer, to prepare a negative electrode slurry. Next, the negative electrode slurry was applied onto a surface of a copper foil so that the mass of the negative electrode mixture per 1 m² was 190 g, and the applied film was dried, and rolled, to obtain a negative electrode having a negative electrode mixture layer with a density of 1.5 g/cm³ formed on each of both sides of the copper foil.

The negative electrode was cut into a shape of 20 mm by 20 mm having a protruding portion of 5 mm by 5 mm, and the negative electrode mixture layer of the protruding portion was peeled off, to expose the copper foil. Then, a negative electrode tab lead was connected to the exposed portion of the negative electrode current collector, and a predetermined region of the outer periphery of the negative electrode tab lead was covered with an insulating film.

### [Production of counter electrode]

A tab with a small piece of Ni mesh welded to its end was prepared, and cut into a predetermined size. The mesh portion was pressed onto a 300-µm-thick lithium metal foil, to obtain a counter electrode.

### [Preparation of nonaqueous electrolyte]

LiPF₆ was dissolved in a mixed solvent of ethylene carbonate (EC), ethyl methyl carbonate (EMC), and dimethyl carbonate (DMC) mixed in a volume ratio of EC:EMC:DMC = 4:1:15, to prepare a nonaqueous electrolyte. The LiPF₆ concentration was set to 1.3 mol/L.

### [Fabrication of cell]

A negative electrode-regulated cell was fabricated using the above negative electrode and two counter electrodes. The negative electrode was sandwiched between a pair of counter electrodes, and the negative electrode mixture layer and each of the lithium metal foil were faced each other with a separator interposed therebetween, to obtain an electrode group. Next, an Al-laminated film cut into a rectangle was folded in half, and its two ends on the long side were heat-sealed, into a tubular shape. The obtained electrode group was then inserted into the tube from one end on the short side, and the one end was heat-sealed, with the end face of the Al-laminated film aligned with the insulating films of respective tab leads. Next, 0.3 cm³ of the nonaqueous electrolyte was injected into the tube from the other end on the short side which was left not heat-sealed. After the injection of electrolyte, an operation of allowing to stand for 3 minutes under a reduced pressure of 0.02 MPa, and then returning to atmospheric pressure was repeated twice, to allow the nonaqueous electrolyte to impregnate into the negative electrode mixture layers. Lastly, the end face of the Al-laminated film on the side from which the electrolyte had been injected was heat-sealed under reducing pressure, to obtain a cell C1 for evaluation. The fabrication of the cell C1 was performed in a dry air atmosphere with a dew point of -60 °C or less.

### [Evaluation]

In a 25 °C ambient temperature, the cell was sandwiched between a pair of 10 by 5 cm stainless steel clamps and secured at a pressure of 1 MPa. Then, lithium was charged to the negative electrode at a constant current of 0.1 C until the cell voltage reached 1.000 V, then, lithium was further charged in the negative electrode at a constant current of 0.01 C until the cell voltage reached 1.000 V, and lastly, lithium was charged to the negative electrode at a constant current of 0.001 C until the cell voltage reached 1.000 V. After the rest for 3 hours, a constant-current discharging at 0.1 C was performed until the cell voltage reached 0.005 V. The ratio of a discharge capacity to a charge capacity was calculated as an initial charge-discharge efficiency. The results are shown in Table 2.

**[Table 2]**

| silicate composite particles | P element / Ge element | | charge-discharge efficiency | | |
|---|---|---|---|---|---|
| | doped species | content (mass%) | charge capacity X (mAh/g) | discharge capacity Y (mAh/g) | charge-discharge efficiency (Y/X) (%) |
| B1 | - | 0 | 1995 | 1801 | 90.3 |
| B2 | Ge | 1 | 1572 | 1294 | 82.3 |
| A1 | P | 0.01 | 2006 | 1814 | 90.4 |
| A2 | P | 0.1 | 1992 | 1804 | 90.6 |
| A3 | P | 1 | 1974 | 1801 | 91.2 |

### <Comparative Example 1>

In the preparation of silicate composite particles, coarse silicon particles (average particle diameter 10 µm) containing no phosphorus element (P) were used. Except for this, in the same manner as in Example 1, silicate composite particles B1 were prepared and a secondary battery was fabricated, which was evaluated in the same manner. The results are shown in Tables 1 and 2.

### <Comparative Example 2>

In the preparation of silicate composite particles, coarse silicon particles (average particle diameter 10 µm) containing germanium element (Ge) at a ratio of 1 mass% were used. Except for this, in the same manner as in Example 1, silicate composite particles B2 were prepared and a secondary battery was fabricated, which was evaluated in the same manner. The results are shown in Tables 1 and 2.

The results in Table 1 show that, by containing phosphorus element in the silicon phases, the growth of the crystallite size of silicon was suppressed, and the volume resistivity of the silicate composite particles was significantly reduced. Reflecting these results, in Table 2, the initial charge-discharge efficiency was significantly improved in the cells using the silicate composite particles A1 to A3. On the other hand, even when phosphorus element was contained in the silicon phases, no significant change was observed in the absolute value of the discharge capacity.

### (Supplementary notes)

The above description of embodiments discloses the following techniques.

### (Technique 1)

A negative electrode active material for a secondary battery, comprising
silicate composite particles each including a silicate phase and silicon phases, wherein
the silicon phases are dispersed in the silicate phase, and
the silicon phases contain phosphorus element in addition to silicon.

### (Technique 2)

The negative electrode active material for a secondary battery according to technique 1, wherein, in the silicon phases, at least part of the phosphorus element is substituted in a form of phosphorus atom in a silicon crystal lattice site.

### (Technique 3)

The negative electrode active material for a secondary battery according to technique 1 or 2, wherein, in the silicon phases, at least part of the phosphorus element constitutes a PO structure.

### (Technique 4)

The negative electrode active material for a secondary battery according to any one of techniques 1 to 3, wherein
the PO structure is included in a PO₃ structure, and
a peak derived from the PO₃ structure is observed in a range of 134.0 eV or more and 134.6 eV or less in a spectrum obtained by X-ray photoelectron spectroscopy.

### (Technique 5)

The negative electrode active material for a secondary battery according to any one of techniques 1 to 4, wherein an average particle diameter of the silicon phases is 1 nm or more and 1000 nm or less.

### (Technique 6)

The negative electrode active material for a secondary battery according to any one of techniques 1 to 5, wherein the silicon phases contain the phosphorus element at a ratio of 0.01 mass% or more and 10 mass% or less.

### (Technique 7)

The negative electrode active material for a secondary battery according to any one of techniques 1 to 6, wherein the silicate phase contains at least one element E1 selected from the group consisting of an alkali metal element and a Group II element.

### (Technique 8)

The negative electrode active material for a secondary battery according to any one of techniques 1 to 7, wherein
the silicate phase further contains an element E2, and
the element E2 is at least one selected from the group consisting of zirconium, niobium, tantalum, lanthanum, vanadium, titanium, phosphorus, bismuth, zinc, tin, lead, antimony, cobalt, fluorine, tungsten, aluminum, and boron.

### (Technique 9)

The negative electrode active material for a secondary battery according to any one of techniques 1 to 8, wherein
in the silicate phase, a composition of Li, Si, and O is represented by a formula: Li_{2z}SiO_{2+z}, and
in the formula, 0 < z < 2 is satisfied.

### (Technique 10)

The negative electrode active material for a secondary battery according to any one of techniques 1 to 9, wherein
a coating layer is present on surfaces of the silicate composite particles, and
the coating layer contains a carbon material.

### (Technique 11)

A secondary battery, comprising: a negative electrode containing the negative electrode active material for a secondary battery according to any one of techniques 1 to 10; a positive electrode; and a nonaqueous electrolyte.

### [Industrial Applicability]

According to the present disclosure, it is possible to provide a secondary battery that can exhibit high capacity and favorable charge-discharge efficiency (esp., initial charge-discharge efficiency). The secondary battery according to the present disclosure is useful as a main power source for mobile communication devices, portable electronic devices, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug, 20: silicate composite particle, 21: lithium silicate phase, 22: silicon particle, 23: base particle, 24: sea-island structure, 26: coating layer

## Claims

1. A negative electrode active material for a secondary battery, comprising
silicate composite particles each including a silicate phase and silicon phases, wherein
the silicon phases are dispersed in the silicate phase, and
the silicon phases contain phosphorus element in addition to silicon.

2. The negative electrode active material for a secondary battery according to claim 1, wherein, in the silicon phases, at least part of the phosphorus element is substituted in a form of phosphorus atom in a silicon crystal lattice site.

3. The negative electrode active material for a secondary battery according to claim 1, wherein, in the silicon phases, at least part of the phosphorus element constitutes a PO structure.

4. The negative electrode active material for a secondary battery according to claim 3, wherein
the PO structure is included in a PO₃ structure, and
a peak derived from the PO₃ structure is observed in a range of 134.0 eV or more and 134.6 eV or less in a spectrum obtained by X-ray photoelectron spectroscopy.

5. The negative electrode active material for a secondary battery according to claim 1, wherein an average particle diameter of the silicon phases is 1 nm or more and 1000 nm or less.

6. The negative electrode active material for a secondary battery according to claim 1, wherein the silicon phases contain the phosphorus element at a ratio of 0.01 mass% or more and 10 mass% or less.

7. The negative electrode active material for a secondary battery according to claim 1, wherein the silicate phase contains at least one element E1 selected from the group consisting of an alkali metal element and a Group II element.

8. The negative electrode active material for a secondary battery according to claim 1, wherein
the silicate phase further contains an element E2, and
the element E2 is at least one selected from the group consisting of zirconium, niobium, tantalum, lanthanum, vanadium, titanium, phosphorus, bismuth, zinc, tin, lead, antimony, cobalt, fluorine, tungsten, aluminum, and boron.

9. The negative electrode active material for a secondary battery according to claim 1, wherein
in the silicate phase, a composition of Li, Si, and O is represented by a formula: Li_{2z}SiO_{2+z}, and
in the formula, 0 < z < 2 is satisfied.

10. The negative electrode active material for a secondary battery according to claim 1, wherein
a coating layer is present on surfaces of the silicate composite particles, and
the coating layer contains a carbon material.

11. A secondary battery, comprising: a negative electrode containing the negative electrode active material for a secondary battery according to any one of claims 1 to 10; a positive electrode; and a nonaqueous electrolyte.
